# EUROPÄISCHE PATENTSCHRIFT

(11) **EP 2 585 740 B1**
(45) Veröffentlichungstag und Bekanntmachung des Hinweises auf die Patenterteilung: **11.02.2015**
(21) Anmeldenummer: 11708207.3
(22) Anmeldetag: 12.03.2011
(51) Int. Cl.: F16K 1/36, F16K 11/044, F16K 41/10, E03C 1/04

(54) **AUSLAUFARMATUR**
SANITARY OUTLET FITTING
ROBINET SANITAIRE

(30) Priorität: 24.06.2010 DE 202010009473 U
(43) Veröffentlichungstag der Anmeldung: 01.05.2013
(73) Patentinhaber: Neoperl GmbH, 79379 Müllheim (DE)
(72) Erfinder: FANGMEIER, Martin, 79424 Auggen (DE)
(74) Vertreter: Börjes-Pestalozza, Henrich
(86) Internationale Anmeldenummer: PCT/EP2011/001230
(87) Internationale Veröffentlichungsnummer: WO 2011/160737

(56) Entgegenhaltungen:
- EP-A1- 1 367 184
- EP-A2- 0 937 927
- EP-A2- 1 029 989
- EP-A2- 1 033 515
- CA-A1- 2 637 121
- DE-A1- 4 423 857
- DE-A1-102005 051 379
- US-A- 4 874 014
- US-A- 5 687 952

## Beschreibung

Die Erfindung betrifft eine Auslaufarmatur mit einem Armaturengehäuse, in dem ein Ventil mit einem Ventilgehäuse vorgesehen ist, das zumindest zwei Fluidöffnungen hat, von denen eine erste Fluidöffnung in einer quer zur Gehäuse-Längserstreckung angeordneten Öffnungsebene und wenigstens eine weitere Fluidöffnung am Gehäuseumfang vorgesehen ist, mit einem Ventilkörper, der über einen in Gehäuse-Längsrichtung verschieblich geführten Ventilstößel mit einem Stellelement verbunden ist, an dem der Ventilkörper von einer die erste Fluidöffnung verschließenden ersten Stellposition gegen eine Rückstellkraft in eine die erste Fluidöffnung öffnende zweite Stellposition bewegbar ist, wobei wenigstens ein in Längsrichtung dehnbares Zugelement aus elastischem Material als Rückstellkraft vorgesehen ist, das einerseits am Ventilkörper und/oder am Ventilstößel und andererseits am Ventilgehäuse gehalten ist.

Aus der US-A 5 687 952 ist bereits eine sanitäre Auslaufarmatur mit einem Armaturengehäuse vorbekannt, in dem ein Ventil vorgesehen ist, das als Absperr- und Entnahmeventil ausgebildet ist. Das Ventil der vorbekannten Auslaufarmatur weist ein Ventilgehäuse auf, das zumindest zwei Fluidöffnungen hat, von denen eine erste Fluidöffnung in einer quer zur Gehäuse-Längserstreckung angeordneten Öffnungsebene und wenigstens eine weitere Fluidöffnung am Gehäuseumfang vorgesehen ist. Das vorbekannte Ventil weist einen Ventilkörper auf, der über einen in Gehäuse-Längsrichtung verschieblich geführten Ventilstößel mit einem Stellelement verbunden ist, an dem der ventilkörper von einer die erste Fluidöffnung verschließenden ersten Stellposition gegen eine Rückstellkraft in eine die erste Fluidöffnung öffnende zweite Stellposition bewegbar ist, wobei wenigstens ein in Längsrichtung dehnbares Zugelement aus elastischem Material als Rückstellkraft vorgesehen ist, das einerseits am Ventilkörper und/oder am Ventilstößel und andererseits am Ventilgehäuse gehallten ist. In der ersten Stellposition, in der die stirnseitige erste Fluidöffnung verschlossen ist, befindet sich das vorbekannte Absperrventil in seiner Schließstellung, in welcher der Wasserauslauf der Auslaufarmatur unterbrochen ist. In der zweiten Stellposition, in welcher der Ventilkörper gegen eine Rückstellkraft in eine Offenstellung bewegt wurde, kann das durch das Ventilgehäuse durchströmende Wasser demgegenüber aus der Auslaufarmatur ausströmen.

Bei dem in der vorbekannten Auslaufarmatur befindlichen Ventil handelt es sich jedoch lediglich um ein Absperr- und Entnahmeventil. Man hat darüber hinaus aber auch Umstellventile geschaffen, um das im Leitungsnetz befindliche Wasser entweder aus einem Badewannenauslass oder aber über einen Brausekopf auslaufen zu lassen.

So kennt man aus der DE 20 2009 002 702 U1 bereits ein Umstellventil, das an seinem Gehäuseumfang zwei voneinander beabstandete Fluidpassagen aufweist und das an einer Gehäuse-stirnseite eine weitere dritte Fluidpassage hat. Während die zur stirnseitigen Fluidpassage benachbarte umfangsseitige Fluidpassage als Fluideinlass ausgestaltet ist, sind die weiteren Fluidpassagen als Fluidauslass vorgesehen. Ist das vorbekannte Umstellventil beispielsweise als Umsteller für eine Badewannen-Auslaufarmatur vorgesehen, kann dessen umfangsseitiger weiterer Fluidauslass zum Badewannen-Auslauf führen, während der stirnseitige Fluidauslauf über eine flexible Schlauchleitung mit einer Handbrause verbunden ist. Im Gehäuseinneren des Ventilgehäuses ist ein Ventilkörper verschieblich geführt, der in einer ersten Ventilstellung den umfangsseitigen Fluideinlass mit dem stirnseitigen Fluidauslass verbindet, während in der anderen Ventilstellung die umfangsseitigen Fluidpassagen miteinander verbunden sind und der Ventilkörper den stirnseitigen Fluidauslass verschließt. Der Ventilkörper ist über einen Ventilstößel mit einem als Handhabe ausgestalteten Stellelement verbunden, an dem der Ventilkörper von der zweiten Ventilstellung gegen die Rückstellkraft einer Rückstellfeder in die erste Ventilstellung bewegbar ist. Dabei wird der Ventilkörper durch das das Ventilgehäuse durchströmende Fluid in der ersten Ventilstellung gehalten, um bei Unterbrechung der Fluidzufuhr praktisch automatisch in die zweite, als Ausgangsstellung vorgesehene Ventilstellung zurückzufallen. Am Ventilkörper ist eine die erste Ventilöffnung in der ersten Stellposition abdichtende erste Dichtung und eine den Ventilstößel dichtend umgreifende zweite Dichtung vorgesehen.

Das vorbekannte Umstellventil ist vergleichsweise aufwendig aus einer Vielzahl, teils auch materialverschiedener Bauteile hergestellt.

Es besteht daher insbesondere die Aufgabe, eine Auslaufarmatur der eingangs erwähnten Art zu schaffen, deren Ventil mit einem geringeren Aufwand herstellbar ist.

Die erfindungsgemäße Lösung dieser Aufgabe besteht bei der Auslaufarmatur der eingangs erwähnten Art insbesondere darin, dass das Ventil als Umstellventil ausgestaltet ist, um das durch das Ventil durchströmende Wasser wahlweise durch eine von zwei Fluidpassagen zu leiten, dass der Ventilkörper in einer ersten Stellposition mit seinem umfangsseitig über den Ventilstößel überstehenden Randbereich an dem die erste Fluidöffnung umgrenzenden Gehäusestirnrand des Ventilgehäuses derart dicht anliegt, dass dem in der Auslaufarmatur durchströmenden Wasser der Weg durch das Umstellventil versperrt ist und das Wasser stattdessen an dem Umstellventil vorbei von einem zuströmseitigen Wasserkanal in einen abströmseitig vorgesehenen, die erste Fluidpassage bildenden Wasserkanal zu fließen hat, und dass der Ventilkörper in einer zweiten Stellposition weit über die erste Fluidöffnung vorsteht und derart vom Ventilgehäuse beabstandet ist, dass der Ventilkörper gegen einen zwischen dem zuströmseitigen Wasserkanal und dem abströmseitigen, die erste Fluidpassage bildenden Wasserkanal zwischengeschalteten Ventilsitz im Armaturengehäuse der Auslaufarmatur gepresst ist, so dass der Ventilkörper die erste Fluidpassage versperrt und stattdessen die stirnseitige Fluidöffnung geöffnet ist, damit das Wasser in das Gehäuseinnere einfließen kann, um über die zumindest eine, am Gehäuseumfang vorgesehene Fluidöffnung sowie einen um das Ventilgehäuse umlaufenden Kanalabschnitt in einen abströmseitigen, die zweite Fluidpassage bildenden Wasserkanal zu fließen.

Die erfindungsgemäße Auslaufarmatur weist in ihrem Armaturengehäuse ein Ventil auf, das ein in Längsrichtung dehnbares Zugelement aus elastischem Material hat, welches als Rückstellkraft für den Ventilkörper dient. Das zumindest eine Zugelement ist einerseits am Ventilkörper und/oder am Ventilstößel und andererseits am Ventilgehäuse gehalten. Bei Druckbeaufschlagung des Stellelements wird der zwischen dem Ventilgehäuse einerseits und dem Ventilkörper und/oder dem Ventilstößel andererseits befindliche Abschnitt des wenigstens einen Zugelements gegebenenfalls zusätzlich derart gedehnt, dass auf den Ventilkörper des Umstellventils eine Rückstellkraft wirkt. Das erfindungsgemäß vorgesehene Zugelement macht eine Rückstellfeder entbehrlich und kann gegebenenfalls auch aus demselben elastischen Material hergestellt werden, aus dem auch die im Gehäuseinneren und/oder am Ventilkörper vorgesehenen Dichtungen bestehen.

Das wenigstens eine Zugelement kann als strangförmige Gummizugfeder ausgestaltet sein. Eine bevorzugte Weiterbildung gemäß der Erfindung sieht demgegenüber vor, dass das Zugelement zumindest in einem Teilbereich seiner Längserstreckung als ein den Ventilstößel zumindest abschnittsweise umhüllender Schlauch ausgestaltet ist. Bei dieser weiterbildenden Ausführungsform wird der Ventilstößel von dem schlauchförmigen Teilbereich des Zugelements dicht umschlossen und die von dem gedehnten Zugelement ausgeübten Rückstellkräfte wirken gleichmäßig und koaxial zur Längserstreckung des Ventilstößels auf diesen und/oder den Ventilkörper ein. Wird der Ventilstößel von dem schlauchförmigen Teilbereich des Zugelements dicht umschlossen, bildet das Zugelement eine hermetische Dichtung des Ventilstößels nach außen, die ein Übertritt des zur Schmierung des Ventilstößels eventuell benötigten Fetts auf die Trinkwasserseite und ein Anlagern dieses Fetts auf den in Abströmrichtung eventuell nachfolgenden sanitären Einbauteilen wirkungsvoll verhindert und das Fett kann sich länger an dem gewählten Einsatzort im Bereich des Ventilstößels halten. Lagert sich nämlich das Fett beispielsweise an einem Strahlregler an, kann dies dort zu einer Homophobität führen, welche die Funktionalität eines solchen Strahlreglers beeinträchtigt.

Um das Zugelement auch in gedehntem Zustand sicher im Ventilgehäuse halten zu können, ist es zweckmäßig, wenn der dem Ventilkegel abgewandte Endbereich des Zugelements zwischen zwei Gehäuseteilen eingespannt gehalten ist.

Um die in einer quer zur Gehäuse-Längserstreckung angeordneten Öffnungsebene vorgesehene und vorzugsweise an einer Gehäuse-Stirnseite befindliche Ventilöffnung mit Hilfe des Ventilkörpers gut abdichten zu können, ist es zweckmäßig, wenn das Zugelement als eine die erste Ventilöffnung in der ersten Stellposition abdichtende erste Dichtung ausgebildet ist. Möglich ist aber auch, dass das Zugelement in einer die erste Dichtung aufnehmenden Ringnut gehalten ist.

Vorteilhaft kann es sein, wenn eine den Ventilstößel dichtend umgreifende zweite Dichtung vorgesehen ist und wenn das Zugelement und insbesondere sein den Ventilstößel umhüllender Teilbereich als zweite Dichtung ausgestaltet ist.

Eine bevorzugte Weiterbildung gemäß der Erfindung sieht vor, dass sich an den den Ventilstößel zumindest abschnittsweise umhüllenden Teilbereich des Zugelementes ein strumpfförmig geschlossener und den Ventilkörper umhüllender Teilbereich des Zugelementes anschließt. Bei dieser weiterbildenden Ausführungsform gemäß der Erfindung umhüllt das Zugelement den Ventilkörper sowie zumindest den an den Ventilkörper angrenzenden Teilbereich des Ventilstößels.

Dabei sieht eine bevorzugte Ausführungsform gemäß der Erfindung vor, dass das Zugelement zumindest mit seinem den Ventilstößel und/oder den Ventilkörper umhüllenden Teilbereich am Ventilstößel beziehungsweise am Ventilkörper anliegt.

Weitere Merkmale der Erfindung ergeben sich aus der folgenden Beschreibung erfindungsgemäßer Ausführungsbeispiele in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- Fig. 1: ein in einer Seitenansicht dargestelltes Umstellventil mit einem Ventilgehäuse sowie mit einem Ventilkörper, der über einen, in Gehäuse-Längsrichtung verschieblich geführten Ventilstößel mit einem Stellelement verbunden ist, an dem der Ventilkörper von einer eine stirnseitige Fluidöffnung verschließenden ersten Stellposition gegen die Rückstellkraft eines elastischen Zugelementes in die hier gezeigte, die stirnseitige Fluidöffnung öffnende zweite Stellposition bewegbar ist,
- Fig. 2: das Umstellventil aus Figur 1 in einem Längsschnitt,
- Fig. 3: das Umstellventil aus Figur 1 und 2 in einer teilweise längsgeschnittenen Perspektivdarstellung,
- Fig. 4: das in einer Seitenansicht dargestellte Umstellventil aus Figur 1 bis 3, dessen Ventilkörper sich hier jedoch in der ersten Stellposition befindet, in welcher der Ventilkörper die stirnseitige Fluidöffnung verschließt,
- Fig. 5: das längsgeschnittene Umstellventil aus Figur 1 bis 4 in der in Figur 4 gezeigten ersten Stellposition seines Ventilkörpers,
- Fig. 6: das dem Ventilkörper des Umstellventils aus Figur 1 bis 5 zugeordnete elastische Zugelement in seiner ungedehnten Ausgangsstellung,
- Fig. 7: das in einer teilweise längsgeschnittenen Perspektivdarstellung gezeigte Umstellventil aus Figur 1 bis 6 in der in Figur 4 gezeigten ersten Stellposition seines Ventilkörpers,
- Fig. 8: das in eine Badewannen-Auslaufarmatur montierte Umstellventil aus Figur 1 bis 7 in der zweiten Stellposition seines Ventilkörpers, wobei die Badewannen-Auslaufarmatur nur in einem längsgeschnittenen Teilbereich dargestellt ist,
- Fig. 9: das in der ersten Stellposition seines Ventilkörpers dargestellte und in die Badewannen-Auslaufarmatur montierte Umstellventil aus Figur 1 bis 8,
- Fig.10: ein in einer Seitenansicht dargestelltes Umstellventil, dessen Ventilkörper sich in der, die stirnseitige Fluidöffnung öffnenden zweiten Stellposition befindet, wobei der Ventilkörper von dem strumpfförmig geschlossenen Teilbereich eines ansonsten schlauchförmigen Zugelementes aus elastischem Material umhüllt ist,
- Fig.11: das Umstellventil aus Figur 10 in einem Längsschnitt,
- Fig.12: das Umstellventil aus Figur 10 und 11 in einer teilweise längsgeschnittenen Perspektivdarstellung,
- Fig.13: das in einer Seitenansicht dargestellte Umstellventil aus Figur 10 bis 12, dessen Ventilkörper sich hier jedoch in der ersten Stellposition befindet, in welcher der Ventilkörper die stirnseitige Fluidöffnung verschließt,
- Fig.14: das längsgeschnittene Umstellventil aus Figur 10 bis 13 in der in Figur 13 gezeigten ersten Stellposition seines Ventilkörpers,
- Fig.15: das den Ventilkörper und den Ventilstößel des Umstellventils aus Figur 10 bis 14 umhüllende und aus elastischem Material hergestellte Zugelement in seiner ungedehnten Ausgangsstellung,
- Fig.16: das in einer teilweise längsgeschnittenen Perspektivdarstellung gezeigte Umstellventil aus Figur 10 bis 15 in der in Figur 13 gezeigten ersten Stellposition seines Ventilkörpers,
- Fig.17: das in eine Badewannen-Auslaufarmatur montierte Umstellventil aus Figur 10 bis 16 in der zweiten Stellposition seines Ventilkörpers, wobei die Badewannen-Auslaufarmatur auch hier nur in einem längsgeschnittenen Teilbereich dargestellt ist und
- Fig.18: das in die Badewannen-Auslaufarmatur montierte Umstellventil aus Figur 10 bis 17 in der ersten Stellposition seines Ventilkörpers.

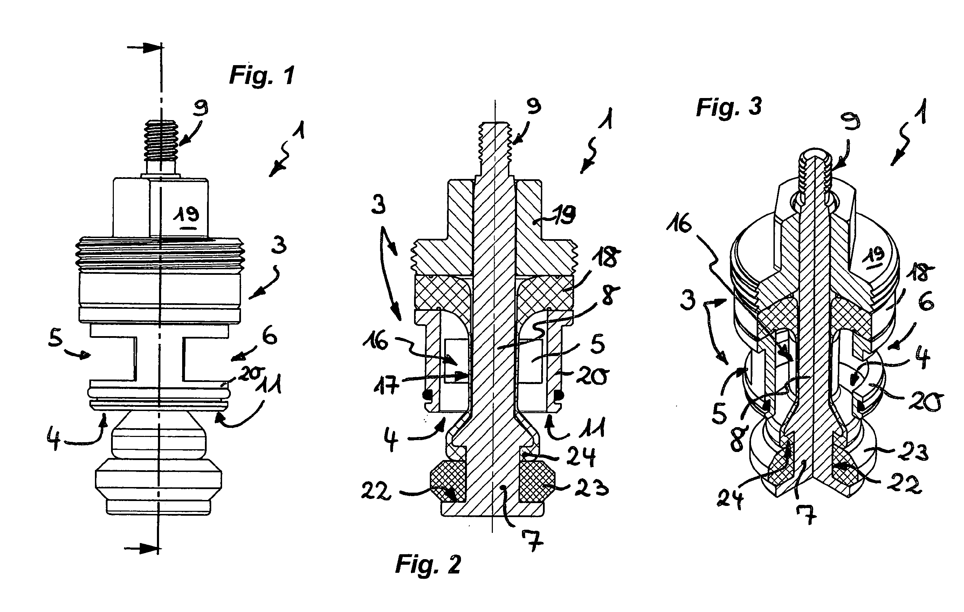

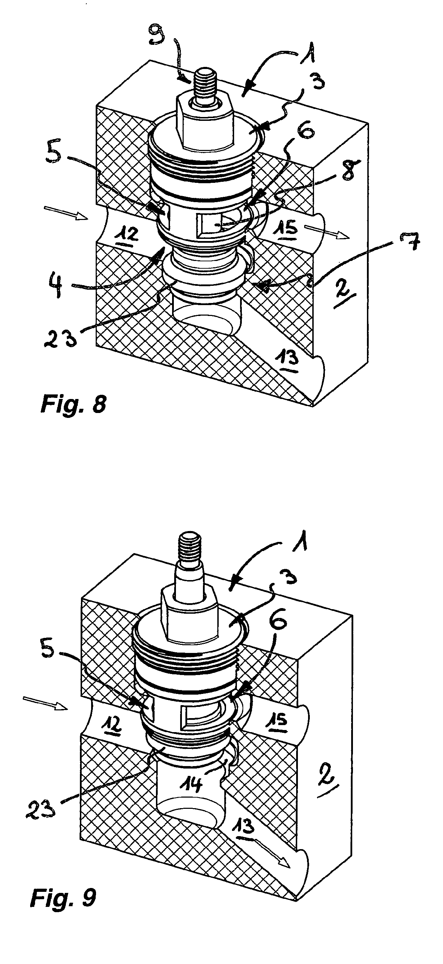

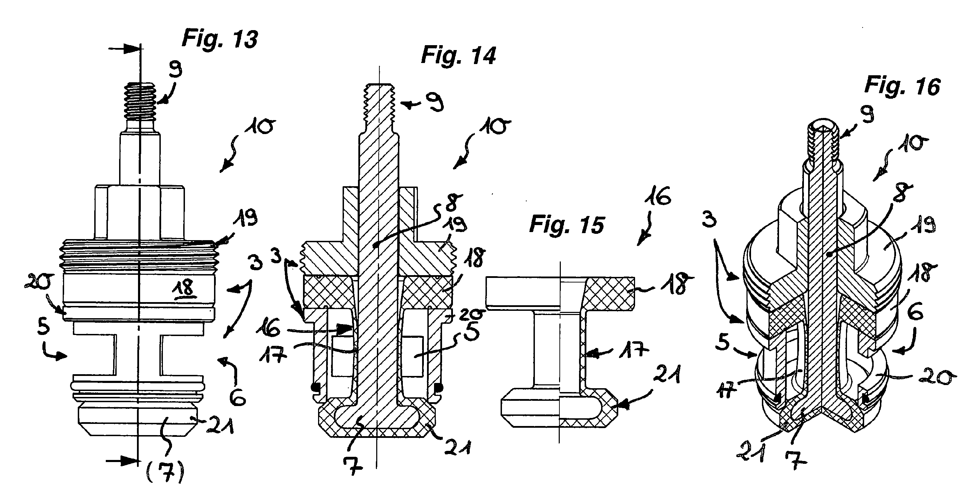

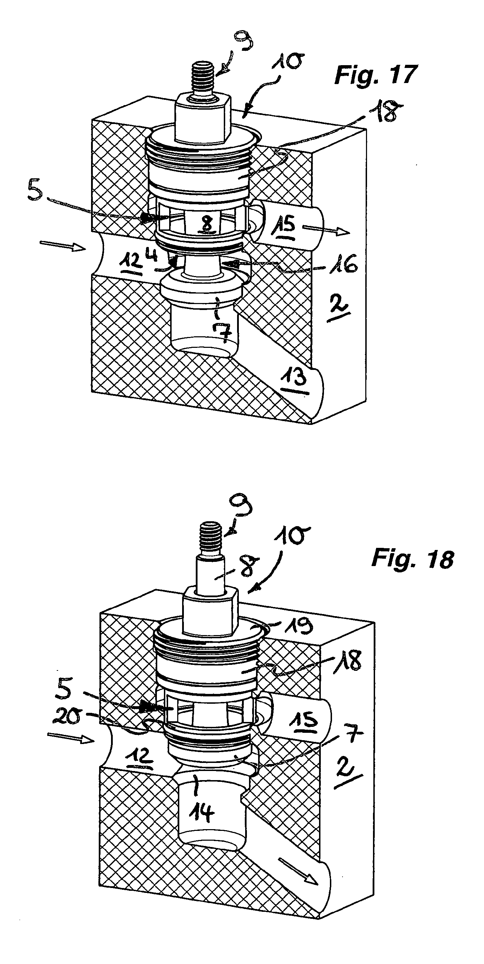

In den Figuren 1 bis 18 sind zwei Umstellventile 1, 10 und deren Bestandteile in verschiedenen Ansichten dargestellt. Die Umstellventile 1, 10 sind beispielsweise zum Einbau in eine Badewannen-Auslaufarmatur 2 bestimmt, um darin das durchfließende Wasser wahlweise durch eine von zwei Fluidpassagen zu leiten, von denen die eine zu einem Badewannen-Auslauf und die andere zu einer Duschbrause führt. Die Umstellventile 1, 10 weisen ein Ventilgehäuse 3 auf, das Fluidöffnungen 4, 5, 6 hat. Davon ist eine erste Fluidöffnung 4 in einer quer zur Gehäuse-Längserstreckung angeordneten Öffnungsebene und hier an der einen Gehäuse-Stirnseite vorgesehen, während die anderen Fluidöffnungen 5, 6 am Gehäuseumfang angeordnet sind.

Die Umstellventile 1, 10 weisen einen Ventilkörper 7 auf, der über einen im Ventilgehäuse 3 in Gehäuse-Längsrichtung verschieblich geführten Ventilstößel 8 mit einem Stellelement verbunden ist. Dabei ist der Ventilkörper 7 tellerförmig ausgebildet und steht umfangsseitig über den Ventilstößel 8 vor. Das Umstellventil 1, 10 ist hier manuell betätigbar. Das nicht weiter dargestellte Stellelement ist dazu als Betätigungsknopf oder dergleichen Handhabe ausgestaltet. Um das Stellelement am Ventilstößel 8 befestigen zu können, weist der Ventilstößel 8 an seinem dem Ventilkörper 7 abgewandten Ventilstößel-Endbereich ein Außengewinde 9 auf, auf das das Stellelement mit einem Innengewinde aufschraubbar ist. An dem Stellelement kann der Ventilkörper 7 von einer, die erste Fluidöffnung 4 verschließenden ersten Stellposition gegen eine Rückstellkraft in eine die erste Fluidöffnung 4 öffnende zweite Stellposition bewegt werden.

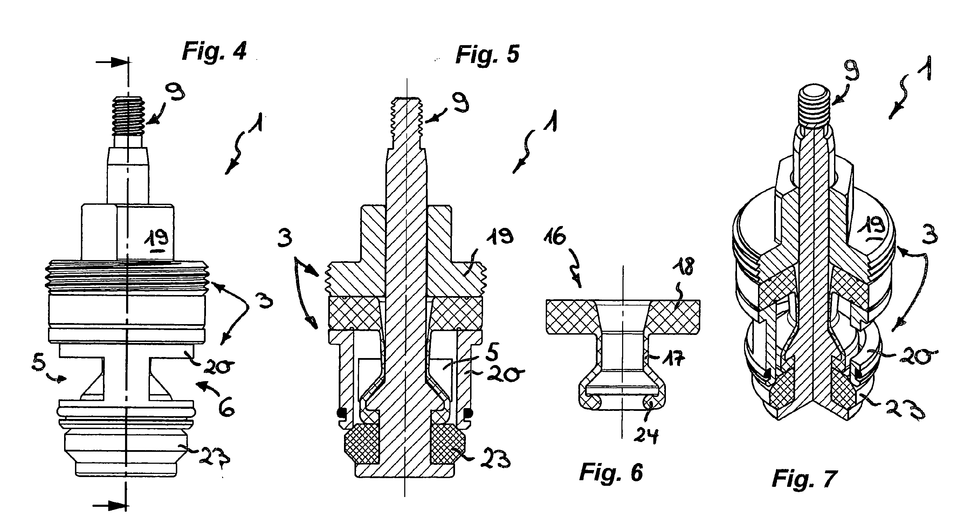

In den Figuren 4, 5, 7 9, 13, 14, 16 und 18 sind die Umstellventile 1, 10 mit ihrem in der ersten Stellposition befindlichen Ventilkörper 7 dargestellt. In dieser ersten Stellposition liegt der Ventilkörper 7 mit seinem umfangsseitig über den Ventilstößel 8 überstehenden Randbereich an dem die erste Fluidöffnung 4 umgrenzenden Gehäusestirnrand 11 des Ventilgehäuses 3 dicht an, so dass dem in der Auslaufarmatur 2 durchströmenden Wasser der Weg durch das Umstellventil 1, 10 versperrt ist und das Wasser stattdessen an dem Umstellventil 1, 10 vorbei von dem zuströmseitigen Wasserkanal 12 in einen abströmseitig vorgesehenen Wasserkanal 13 beispielsweise zum Badewannen-Auslauf zu fließen hat.

In den Figuren 1, 2, 3, 8, 10, 11, 12 und 17 sind die Umstellventile 1, 10 demgegenüber mit ihrem in der zweiten Stellposition befindlichen Ventilkörper 7 dargestellt. In dieser zweiten Stellposition steht der Ventilkörper 7 weit über die erste Fluidöffnung 4 vor und ist derart vom Ventilgehäuse 3 beabstandet, dass der Ventilkörper 7 gegen einen zwischen dem zuströmseitigen Wasserkanal 12 und dem abströmseitigen Wasserkanal 13 zwischengeschalteten Ventilsitz 14 im Armaturengehäuse der Auslaufarmatur 2 gepresst ist. In dieser zweiten Stellposition versperrt der Ventilkörper 7 also die vom Wasserkanal 12 zum Wasserkanal 13 führende Fluidpassage und öffnet stattdessen die stirnseitige Fluidöffnung 4, so dass das Wasser in das Gehäuseinnere des Ventilgehäuses 3 einfließen kann, um über die am Gehäuseumfang vorgesehenen Fluidöffnungen 5, 6 sowie einen um das Ventilgehäuse umlaufenden Kanalabschnitt in den abströmseitigen Wasserkanal 15 zu fließen, der beispielsweise zu einer Handbrause führt, die mit der Badewannen-Auslaufarmatur 2 über einen flexiblen Brauseschlauch verbunden ist.

Aus einem Vergleich der Figuren 1 bis 18 wird deutlich, dass der Ventilkörper 7 von der ersten Stellposition gegen eine Rückstellkraft in die zweite Stellposition bewegbar ist. Dabei ist als Rückstellkraft ein in Längsrichtung dehnbares Zugelement 16 aus elastischem und insbesondere aus gummielastischem Material vorgesehen, das einerseits am Ventilkörper 7 und/oder am Ventilstößel 8 und andererseits am Ventilgehäuse 3 gehalten ist. Dieses Zugelement 16 ist in einem Teilbereich 17 seiner Längserstreckung als ein den Ventilstößel 8 zumindest abschnittsweise umhüllender Schlauch ausgestaltet. An den schlauchförmigen Teilbereich 17 des Zugelementes 16 ist ein flanschartiger Teilbereich 18 einstückig angeformt. Dieser dem Ventilkörper 7 abgewandte Teilbereich 18 des Zugelementes 16 ist zwischen zwei Gehäuseteilen 19, 20 des Ventilgehäuses 3 eingespannt gehalten, derart, dass dieser Endbereich 18 des Zugelementes 16 die Gehäuseteile 19, 20 dichtringartig gegeneinander abdichtet. Dabei bildet das Zugelement 16 gleichzeitig auch eine den Ventilstößel 8 dichtend umgreifende Dichtung, die die Verschieblichkeit des Ventilstößels 8 im Ventilgehäuse 3 gewährleistet, aber gleichzeitig den beweglichen Ventilstößel 8 nach außen abdichtet.

Der Ventilkörper 7 wird durch das vom Wasserkanal 12 in den Wasserkanal 15 fließende Wasser in seiner zweiten Stellposition gehalten, um nach Absperren der Auslaufarmatur und Unterbrechen des Wasserstromes mittels der vom Zugelement 16 ausgeübten Rückstellkraft in die erste Stellposition zurückzufallen.

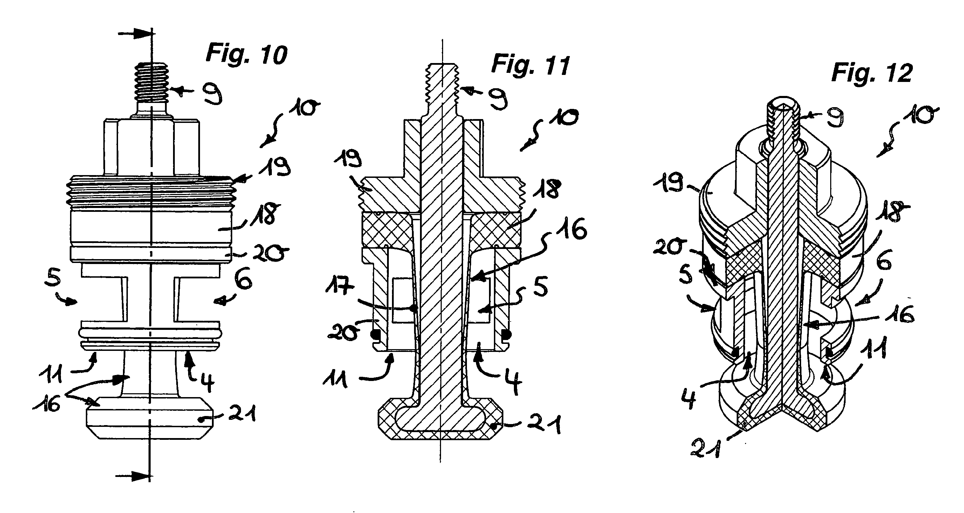

Bei dem in den Figuren 10 bis 18 dargestellten Umstellventil 10 schließt sich an den den Ventilstößel 8 zumindest abschnittsweise umhüllenden Teilbereich 17 des Zugelementes 16 ein stromförmig geschlossener und den Ventilkörper 7 umhüllender Teilbereich 21 des Zugelementes 16 an. Dieser den Ventilkörper 7 umhüllende Teilbereich 21 ist als eine die stirnseitige erste Ventilöffnung 4 in der ersten Stellposition abdichtende Dichtung ausgebildet. Da der Teilbereich 21 das Zugelement 16 allseits umschließt, kann dieser Teilbereich 21 auch in der zweiten Stellposition als Dichtung gegenüber dem Ventilsitz 14 wirken.

Demgegenüber ist am Ventilkörper 7 des in den Figuren 1 bis 9 dargestellten Umstellventils 1 eine Ringnut 22 vorgesehen, in der ein hier bikonischer Dichtring 23 angeordnet ist. Dieser Dichtring 23 hat den Ventilkörper 7 des Umstellventils 1 in seiner ersten Stellposition gegenüber dem Ventilgehäuse 3 und in seiner zweiten Stellposition gegenüber dem Ventilsitz 14 abzudichten. Das Zugelement 16 des Umstellventils 1 weist an seinem dem Ventilkörper 7 zugewandten Endbereich einen nach innen eingezogenen Ringflansch 24 auf, der in der den Dichtring 23 aufnehmenden Ringnut 22 gehalten ist.

Die Zugelemente 16 der hier dargestellten Umstellventile 1, 10 machen eine Rückstellfeder entbehrlich und können gegebenenfalls auch aus demselben elastischen Material hergestellt werden, aus dem auch die im Gehäuseinneren des Ventilgehäuses 3 und/oder am Ventilkörper 7 vorgesehenen Dichtungen bestehen.

## Patentansprüche

1. Auslaufarmatur (2) mit einem Armaturengehäuse, in dem ein Ventil (1, 10) mit einem Ventilgehäuse (3) vorgesehen ist, das (3) zumindest zwei Fluidöffnungen (4, 5, 6) hat, von denen eine erste Fluidöffnung (4) in einer quer zur Gehäuse-Längserstreckung angeordneten Öffnungsebene und wenigstens eine weitere Fluidöffnung (5, 6) am Gehäuseumfang vorgesehen ist, mit einem Ventilkörper (7), der über einen in Gehäuse-Längsrichtung verschieblich geführten Ventilstößel (8) mit einem Stellelement verbunden ist, an dem der Ventilkörper (7) von einer die erste Fluidöffnung (4) verschließenden ersten Stellposition gegen eine Rückstellkraft in eine die erste Fluidöffnung (4) öffnende zweite Stellposition bewegbar ist, wobei wenigstens ein in Längsrichtung dehnbares Zugelement (16) aus elastischem Material als Rückstellkraft vorgesehen ist, das einerseits am Ventilkörper (7) und/oder am Ventilstößel (8) und andererseits am Ventilgehäuse (3) gehalten ist, **dadurch gekennzeichnet, dass** das Ventil (1, 10) als Umstellventil ausgestaltet ist, um das durch das Ventil (1, 10) durchströmende Wasser wahlweise durch eine von zwei Fluidpassagen zu leiten, dass der Ventilkörper (7) in einer ersten Stellposition mit seinem umfangsseitig über den Ventilstößel (8) überstehenden Randbereich an dem die erste Fluidöffnung (4) umgrenzenden Gehäusestirnrand (11) des Ventilgehäuses (3) derart dicht anliegt, dass dem in der Auslaufarmatur (2) durchströmenden Wasser der Weg durch das Umstellventil (1, 10) versperrt ist und das Wasser stattdessen an dem Umstellventil (1, 10) vorbei von einem zuströmseitigen Wasserkanal (12) in einen abströmseitig vorgesehenen, die erste Fluidpassage bildenden Wasserkanal (13) zu fließen hat, und dass der Ventilkörper (7) in einer zweiten Stellposition weit über die erste Fluidöffnung (4) vorsteht und derart vom Ventilgehäuse (3) beabstandet ist, dass der Ventilkörper (7) gegen einen zwischen den zuströmseitigen Wasserkanal (12) und dem abströmseitigen, die erste Fluidpassage bildenden Wasserkanal (13) zwischengeschalteten Ventilsitz (14) im Armaturengehäuse der Auslaufarmatur (2) gepresst ist, so dass der Ventilkörper (7) die erste Fluidpassage versperrt und stattdessen die stirnseitige Fluidöffnung (4) geöffnet ist, damit das Wasser in das Gehäuseinnere des Ventilgehäuses (3) einfließen kann, um über die zumindest eine, am Gehäuseumfang vorgesehene Fluidöffnung (5, 6) sowie einen um das Ventilgehäuse (3) umlaufenden Kanalabschnitt in einen abströmseitigen, die zweite Fluidpassage bildenden Wasserkanal (15) zu fließen.

2. Auslaufarmatur (2) nach Anspruch 1, **dadurch gekennzeichnet, dass** das als Rückstellkraft vorgesehene Zugelement (16) aus gummielastischem Material ist.

3. Auslaufarmatur (2) nach Anspruch 1 oder 2, **dadurch gekennzeichnet, dass** das Zugelement (16) zumindest in einem Teilbereich (17) seiner Längserstreckung als ein den Ventilstößel (8) zumindest abschnittsweise umhüllender Schlauch ausgestaltet ist.

4. Auslaufarmatur (2) nach einem der Ansprüche 1 bis 3, **dadurch gekennzeichnet**, der dem Ventilkörper (7) abgewandte Teil- oder Endbereich (18) des Zugelementes (16) zwischen zwei Gehäuseteilen (19, 20) eingespannt gehalten ist.

5. Auslaufarmatur (2) nach einem der Ansprüche 1 bis 4, dass eine die erste Fluidöffnung (4) in der ersten Stellposition abdichtende erste Dichtung vorgesehen ist und dass das Zugelement (16) als eine erste Dichtung ausgebildet ist oder in einer die erste Dichtung (23) aufnehmenden Ringnut (22) gehalten ist.

6. Auslaufarmatur (2) nach einem der Ansprüche 1 bis 5, **dadurch gekennzeichnet, dass** eine den Ventilstößel (8) dichtend umgreifende zweite Dichtung vorgesehen ist und dass das Zugelement (16) und insbesondere sein den Ventilstößel (8) umhüllender Teilbereich (17) als zweite Dichtung ausgestaltet ist.

7. Auslaufarmatur (2) nach einem der Ansprüche 1 bis 6, **dadurch gekennzeichnet, dass** sich an den den Ventilstößel (8) zumindest abschnittsweise umhüllenden Teilbereich (17) des Zugelementes (16) ein strumpfförmig geschlossener und den Ventilkörper (7) umhüllender Teilbereich (21) des Zugelements (16) anschließt.

## Claims

1. Exit fitting (2) having a fitting housing, in which a valve (1, 10) with a valve housing (3) is provided, which housing (3) has at least two fluid openings (4, 5, 6), of which a first fluid opening (4) is provided in an opening plane arranged transversely to the longitudinal extent of the housing and at least one further fluid opening (5, 6) is provided on the housing circumference, and having a valve body (7) which is connected via a valve tappet (8), which is guided such that it can be displaced in the longitudinal direction of the housing, to an actuating element, at which the valve body (7) can be moved counter to a restoring force from a first actuating position, in which it closes the first fluid opening (4), into a second actuating position, in which it opens the first fluid opening (4), wherein at least one longitudinally extensible tension element (16) made of elastic material is provided as the restoring force, this tension element being retained, on the one hand, on the valve body (7) and/or on the valve tappet (8) and, on the other hand, on the valve housing (3), **characterized in that** the valve (1, 10) is configured as a changeover valve in order for the water flowing through the valve (1, 10) to be directed optionally through one of two fluid passages, **in that** the valve body (7), in a first actuating position, has its peripheral region which projects circumferentially beyond the valve tappet (8) butting with sealing action against the end periphery (11) of the valve housing (3), this end periphery encircling the first fluid opening (4), such that the water flowing through in the exit fitting (2) has its path blocked by the changeover valve (1, 10) and the water, instead, has to flow, past the changeover valve (1, 10), from an inflow-side water channel (12) into an outflow-side water channel (13), which forms the first fluid passage, and **in that** the valve body (7), in a second actuating position, projects far beyond the first fluid opening (4) and is spaced apart from the valve housing (3) such that the valve body (7) is pressed against a valve seat (14) in the housing of the exit fitting (2), this valve seat being incorporated between the inflow-side water channel (12) and the outflow-side water channel (13), which forms the first fluid passage, and therefore the valve body (7) blocks the first fluid passage and, instead, the end-side fluid opening (4) is open so that the water can flow into the interior of the valve housing (3), in order to flow, via the at least one fluid opening (5, 6) provided on the housing circumference and via a channel portion running around the valve housing (3), into an outflow-side water channel (15) which forms the second fluid passage.

2. Exit fitting (2) according to Claim 1, **characterized in that** the tension element (16) provided as the restoring force is made of elastomeric material.

3. Exit fitting (2) according to Claim 1 or 2, **characterized in that** the tension element (16), at least along a sub-region (17) of its longitudinal extent, is configured as a hose which at least partially encases the valve tappet (8).

4. Exit fitting (2) according to one of Claims 1 to 3, **characterized in that** the sub-region or end region (18) of the tension element (16) which is directed away from the valve body (7) is kept clamped in between two housing parts (19, 20).

5. Exit fitting (2) according to one of Claims 1 to 4, **characterized in that** a first seal is provided, this seal sealing the first fluid opening (4) in the first actuating position, and **in that** the tension element (16) is designed as a first seal or is retained in an annular groove (22) which accommodates the first seal (23).

6. Exit fitting (2) according to one of Claims 1 to 5, **characterized in that** a second seal is provided, this seal engaging with sealing action around the valve tappet (8), and **in that** the tension element (16), and in particular the sub-region (17) thereof which encases the valve tappet (8), is configured as a second seal.

7. Exit fitting (2) according to one of Claims 1 to 6, **characterized in that** the sub-region (17) of the tension element (16) which at least partially encases the valve tappet (8) is joined by a sub-region (21) of the tension element (16) which is closed in a sock-like manner and encases the valve body (7).

## Revendications

1. Robinetterie de sortie (2), avec un corps de robinetterie dans lequel est prévue une soupape (1, 10) avec un boîtier de soupape (3) qui possède au moins deux ouvertures pour fluide (4, 5, 6), parmi lesquelles une première ouverture pour fluide (4) est prévue dans un plan d'ouverture disposé transversalement à l'étendue longitudinale du boîtier et au moins une autre ouverture pour fluide (5, 6) est prévue sur le pourtour du boîtier, et avec un corps de soupape (7) qui est relié par l'intermédiaire d'un poussoir de soupape (8) guidé en coulissement dans la direction longitudinale du boîtier à un élément de commande par lequel le corps de soupape (7) peut être déplacé à l'encontre d'une force de rappel d'une première position de commande fermant la première ouverture pour fluide (4) dans une deuxième position de commande ouvrant la première ouverture pour fluide (4), sachant qu'au moins un élément de traction (16), en matériau élastique, extensible en direction longitudinale, est prévu comme force de rappel, élément qui est maintenu d'une part sur le corps de soupape (7) et/ou sur le poussoir de soupape (8) et d'autre part sur le boîtier de soupape (3), **caractérisée en ce que** la soupape (1, 10) est réalisée sous forme de soupape à deux positions, afin de diriger l'eau s'écoulant à travers la soupape (1, 10) sélectivement par l'un de deux passages de fluide, **en ce que**, dans une première position de commande, le corps de soupape (7) s'applique, par sa région de bord dépassant périphériquement du poussoir de soupape (8), en étanchéité contre le bord frontal (11) du boîtier de soupape (3) délimitant la première ouverture pour fluide (4) de telle sorte que l'eau s'écoulant dans la robinetterie de sortie (2) est empêchée de s'écouler à travers la soupape à deux positions (1, 10) et, au lieu de cela, contourne la soupape à deux positions (1, 10) et est obligée de s'écouler d'un canal d'eau (12) côté flux entrant dans un canal d'eau (13) prévu côté flux sortant et formant le premier passage de fluide, et **en ce que**, dans une deuxième position de commande, le corps de soupape (7) dépasse loin au-dessus de la première ouverture pour fluide (4) et est distant du boîtier de soupape (3) de telle sorte que le corps de soupape (7) est pressé dans le corps de robinetterie de la robinetterie de sortie (2) contre un siège de soupape (14) intercalé entre le canal d'eau (12) côté flux entrant et le canal d'eau (13) côté flux sortant formant le premier passage de fluide, de sorte que le corps de soupape (7) ferme le premier passage de fluide et, au lieu de cela, l'ouverture pour fluide (4) située du côté frontal est ouverte afin que l'eau puisse affluer à l'intérieur du boîtier de soupape (3), pour s'écouler, par l'intermédiaire de l'ouverture pour fluide au moins unique (5, 6) prévue sur le pourtour du boîtier et d'un tronçon de canal faisant le tour du boîtier de soupape (3), dans un canal d'eau (15) côté flux sortant qui forme le deuxième passage de fluide.

2. Robinetterie de sortie (2) selon la revendication 1, **caractérisée en ce que** l'élément de traction (16) prévu comme force de rappel est réalisé en un matériau ayant l'élasticité du caoutchouc.

3. Robinetterie de sortie (2) selon la revendication 1 ou 2, **caractérisée en ce que** l'élément de traction (16) est réalisé, au moins dans une région partielle (17) de son étendue longitudinale, sous la forme d'un tuyau souple enveloppant au moins sectoriellement le poussoir de soupape (8).

4. Robinetterie de sortie (2) selon l'une des revendications 1 à 3, **caractérisée en ce que** la région partielle ou terminale (18) de l'élément de traction (16) qui est opposée au corps de soupape (7) est maintenue en étant serrée entre deux parties de boîtier (19, 20).

5. Robinetterie de sortie (2) selon l'une des revendications 1 à 4, **caractérisée en ce qu'**il est prévu un premier joint d'étanchéité assurant l'étanchéité de la première ouverture pour fluide (4) dans la première position de commande, et **en ce que** l'élément de traction (16) est réalisé sous la forme d'un premier joint d'étanchéité ou est maintenu dans une rainure annulaire (22) recevant le premier joint d'étanchéité (23).

6. Robinetterie de sortie (2) selon l'une des revendications 1 à 5, **caractérisée en ce qu'**il est prévu un deuxième joint d'étanchéité s'engageant en étanchéité autour du poussoir de soupape (8), et **en ce que** l'élément de traction (16) et en particulier sa région partielle (17) enveloppant le poussoir de soupape (8) est réalisé (e) sous forme de deuxième joint d'étanchéité.

7. Robinetterie de sortie (2) selon l'une des revendications 1 à 6, **caractérisée en ce qu'**une région partielle (21) de l'élément de traction (16), fermée en forme de manchon et enveloppant le corps de soupape (7), se raccorde à la région partielle (17) de l'élément de traction (16) qui enveloppe au moins sectoriellement le poussoir de soupape (8).
